# EUROPEAN PATENT APPLICATION

(11) **EP 0 661 131 A1**
(43) Date of publication of application: **05.07.1995**
(21) Application number: 94309437.5
(22) Date of filing: 16.12.1994
(51) Int. Cl.: B23Q 11/08, F16J 3/04

(54) **Bellows**

(30) Priority: 31.12.1993 JP 352127/93
(71) Applicant: Nemoto, Takeshi, Kamakura 248 (JP); Nemoto, Teruko, Kamakura 248 (JP)
(72) Inventor: Nemoto, Takeshi, Kamakura 248 (JP); Nemoto, Teruko, Kamakura 248 (JP)
(74) Representative: Cooke, William Douglas

(57) **Abstract**

A bellows formed from a continuous one piece sheet (1) by alternately folding in fan folding fashion, having a plurality of folding (2) having a folding angle (2) defined by adjacent plane sections, less than or equal to 10°, more preferably in a range of 0° to substantially 0° at no load condition, which folding being permanently provided by heat treatment at a condition compressed along an expansion axis of the bellows at a maximum compression ratio.

## Description

### BACKGROUND OF THE INVENTION

### Field of the Invention

The present invention relates generally to an expansion cover for shielding expandable portion of a machine or so forth for protecting the expandable portion from dirt, light, moisture and so forth. More specifically, the invention relates to a bellows which can cause exact compressing deformation in response to a displacement in compression direction.

The present invention is particularly directed to a known folding type bellows, in which a folding means for permitting expansion and contraction of the bellows is foldings of a continuous sheet. The present invention may not be generally applicable for a known seam-type bellows which is formed by seaming separated sheet pieces.

More specifically, the invention is directed to a known folding type bellows of the type which has a quadrangular cross-section and covers overall periphery of the object to be shielded or which covers the shielding object except for the bottom. Through the disclosure, the type which covers the overall periphery of the shielding object will be referred to as whole cover type and the type which covers the shielding object except for the bottom thereof will be referred to as partial cover type.

### Description of the Related Art

Conventionally, there are various materials for fabricating the bellows. For example, a sheet formed by coating a neoprene rubber on a fabric and a sheet formed by coating a rubber on a nylon core are used as material blank for forming the bellows. In the production process of the folding type bellows, a piece of material sheet is folded alternately in zigzag fashion for forming fan fold so that respective folded portions permit expansion and contraction of the bellows according to displacement the shielding object, such as expandable portion of a machine or so forth, with maintaining the shielding effect.

As is well known, the folding type bellows requires lesser production processes and period than the seam type bellows. Therefore, the folding type bellows have been known to be advantageous for ease in production and low production cost.

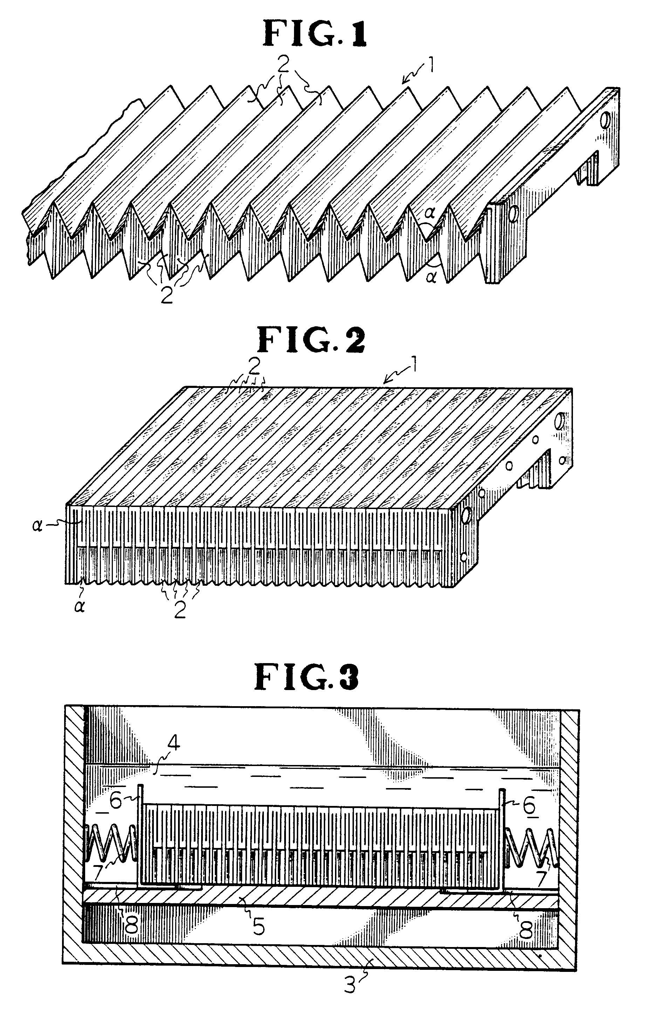

However, since the conventional folding type bellows is formed by alternately folding a single continuous sheet of an elastically deformable material, a certain elastic folding back force may be exerted on respective folding at the initial no load condition after completion of production. This results in certain magnitude of expansion of the bellows as shown in Fig. 1.

Discussion will be hereinafter with respect to the state of the conventional folding type bellows with reference to Fig. 1. Fig. 1 is a perspective view of a folding type bellows covering three surfaces except for the bottom, in which the bellows is situated in an initial no load condition. As can be observed from Fig. 1, at the relaxed condition of the bellows free from stresses in expansion and compression directions, an angle a which is formed by planes adjacent across each folding and variable depending upon expansion and contraction of the bellows, is in a range of 40° to 80°.

When a displacement in the contracting direction is caused in the bellows in the initial no loading condition expanded in the certain magnitude, a stress is exerted on respective folding defining the angle a. Then, due to elasticity of the material of the bellows, a reactive force against the stress is generated at respective folding. The reactive force is transmitted from both axial ends to the central portion to concentrically cause contraction at the central portion with maintaining the initial angles a at the axial end portions. At this time, since the deformation is concentrically caused at the central portion of the bellows, the central portion causes vertical displacement, typically in downward direction due to gravity, to project from the normal contour of the bellows. This results in failure of shielding or in interference with the component of the machine to be shielded to damage the bellows.

As a solution for this in the prior art, one or more intermediate supporting members, such as sliding rings, sliding supporters, weights or composite members thereof, pivotably supported on the shielding object, such as shaft, threaded shaft or so forth, are provided within the intermediate portion of the bellows for suppressing projection of the intermediate portion of the bellows.

However, the above-mentioned conventional solution cannot solve the basic problem held in the conventional bellows. Also, providing of the supporting member or members inherently causes increasing of the weight of the bellows to degrade response characteristics of the bellows against the displacement of the shielding object. This makes it impossible to follow quick reciprocal motion to interfere the motion of the shielding object. For instance, due to low response characteristics, the bellows may cause motion in the opposite direction to the motion direction of the shielding object.

If it is desired to use the bellows with avoiding the foregoing defects, in view of a certain magnitude of expansion with the open angle α in the range of 40° to 80° of the adjacent planes at the initial no-load condition and recognition that contracting deformation of the bellows may cause the problems, the bellows has to be used in a stroke range where only tension or expansion force will be exerted thereto at the initial no-load condition. Then, the bellows may exactly follow displacement of the shielding object with satisfactorily high response to displacement of the shielding object. In other words, the conventional bellows cannot be used in the stroke range where compressing or contracting force is exerted to the bellows at the initial no-load condition, without causing any problem and with maintaining satisfactory performance. Such conventional bellows has typical expansion ratio in a range of 5 to 6 times of the initial length.

### SUMMARY OF THE INVENTION

In view of the problems in the prior art as set forth above, it is an object of the present invention to provide an improved high performance bellows which can have greater expansion ratio, such as in a range of 10° to 20 times of the initial length.

In order to accomplish the above-mentioned and other objects, a bellows, according to one aspect of the invention, is formed from a continuous one piece sheet by alternately folding in fan folding fashion, and has a plurality of folding having a folding angle defined by adjacent plane sections, less than or equal to 10 at no load condition, which folding being permanently provided by heat treatment at a condition compressed along an expansion axis of the bellows at a maximum compression ratio.

In practice, the bellows may cover overall periphery of a shielding object. Alternatively, the bellows may cover a part of the periphery of a shielding object.

According to another aspect of the invention, a process for producing a bellows comprises the steps of:
providing a material sheet containing a elastic component;
alternately folding the material sheet in a fan folding fashion with a plurality of alternately folded folding;
compressing the folded material at a maximum compression ratio for attaining a minimum axial length of the bellows; and
effecting heat treatment with maintaining the compressed material at the compressed state at the maximum compression ratio for providing permanent deformation at each folding to have a folding angle in a range of less than or equal to 10° at no load condition.

Preferably, the folding angle at each of the folding is in a range of 0° to substantially 0°.

The sheet may be made from a primary material of a fabric coated with a neoprene rubber. In the alternative, the sheet may be made from a primary material of a nylon core coated with a rubber.

In practice, the heat treatment is performed by dipping in a hot water the bellows at the compressed condition at the maximum compression ratio. The heat treatment may be performed in the hot water in a temperature range of 80 to 100 °C . The preferred period for the heat treatment is a period of 1 to 4 minutes.

Alternatively, the heat treatment is performed within a thermostatic bath. In the further alternative, the heat treatment is performed by blowing a hot air.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a partial perspective view showing the conventional folding type bellows which covers three planes except for the bottom plan, at an initial no-load condition;
Fig. 2 is a perspective view of the preferred embodiment of a folding type bellows of the present invention which covers three planes except for the bottom plane of an object to be shielded, at an initial no-load condition; and
Fig. 3 is a longitudinal section showing an example of means for forming the folding type bellows of Fig. 2.

### DESCRIPTION OF THE PREFERRED EMBODIMENT

The preferred embodiment of a folding type bellows in accordance with the present invention will now be discussed in detail with reference to Figs. 2 and 3. The shown embodiment is directed, but not imitatively, to the folding type bellows which can cover three planes. i.e. the top plane and both side plans but do not cover the bottom plane. The shown embodiment of the folding type bellows is formed of a one piece sheet 1. In the preferred embodiment, the sheet is formed of a fabric coated with neoprene rubber or nylon core coated with a rubber as primary material. However, the material for forming the sheet can be any appropriate materials. The material sheet 1 is alternately folded at respective folding points 2, 2, 2, .... into fan shaped configuration. An angle α at respective folding points 2, 2, 2, ... defined between adjacent plane portions which angle will be herein after referred to as "holding angle", is preferred to be in a range less than or equal to 10° , and more preferably in a range of 0° to near 0°, at the initial no-load condition.

An example of means for providing the holding angle in a range of 0° to near 0° for the bellows of Fig. 2 is illustrated in Fig. 3. In the shown example, a vessel 3 is filled with a hot water at a temperature in a range of 80 °C to 100 °C. In practice, the bellows is maintained within the hot water for a period in a range of 1 to 4 minutes. The temperature of the hot water may be maintained in the above-mentioned preferred range by an appropriate known temperature control device (not shown). The folded bellows is dipped within the hot water. Then, the folded bellows is compressed within the hot water at the temperature range of 80 °C to 100 °C to have the folding angle in the preferred range.

The bellows may be held at the folded with the folding angle in the range of 0° to near 0° by various ways. For instance, the bellows may be maintained at the tightly folded position by tightly tying the bellows with a tying strip, or, in the alternative, by clamping with an enough size of clip.

However, in the preferred embodiment, the bellows is clamped in the tightly folded position by means of the device illustrated in Fig. 3. The device includes a bellows receptacle base 5. Guide grooves 8,8 are formed on the supper surface of the base 5. The guide grooves 8, 8 extend substantially along the longitudinal axis of the bellows which is placed on the base 5. Abutment plates 6, 6 are engaged with respective guide grooves 8, 8 for linear reciprocal motion therealong. Between the peripheral wall of the vessel 3 and the abutment plates 6, 6, compression springs 7, 7 are disposed for resiliently biasing the abutment plates 6, 6 toward the center. Therefore, when the bellows is placed on the base 5 with abutting the axial ends to the abutment plates 6, 6, it is subject the resilient spring force of the compression springs 7, 7. Therefore, by appropriately selecting the spring coefficients of the compression springs 7, 7, the bellows can be maintained at the tightly folded position as shown in Fig. 2. Therefore, heating process for the bellows can be performed with maintaining the bellows in tightly folded position.

It should be noted that although the shown embodiment processes the bellows within the vessel 3 filled with the hot water, it is possible to perform the heating process for the bellows with other means. For example, the heating process for the bellows may be performed within a thermostatic bath, or by blowing a hot air.

After the heating process for the bellows, permanent folding with the holding angle in the range of 0° or near 0° . By this, the bellows according to the present invention should have the minimum axial length at the initial no-load condition. Therefore, deformation of the bellows can be caused exclusively in the expansion direction relative to the initial no-load condition.

This permits quick response to the displacement of the shielding object with exact deformation. Furthermore, since the folding angle is variable within a range of substantially 0° to 180° when the bellows is expanded, it becomes possible to provide the expansion ration of 10 to 20 times of the initial length of the bellows.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A bellows formed from a continuous one piece sheet by alternately folding in fan folding fashion, having a plurality of folding having a folding angle defined by adjacent plane sections, less than or equal to 10° at no load condition, which folding being permanently provided by heat treatment at a condition compressed along an expansion axis of the bellows at a maximum compression ratio.

2. A bellows as set forth in claim 1, wherein said folding angle at each of the folding is in a range of 0° to substantially 0°.

3. A bellows as set forth in claim 1, wherein said sheet is made from a primary material of a fabric coated with a neoprene rubber.

4. A bellows as set forth in claim 1, wherein the sheet is made from a primary material of a nylon core coated with a rubber.

5. A bellows as set forth in claim 1, wherein the heat treatment is performed by dipping in a hot water the bellows at the compressed condition at the maximum compression ratio.

6. A bellow as set forth in claim 5, wherein the heat treatment is performed in the hot water in a temperature range of 80 to 100 °C.

7. A bellows as set forth in claim 5, wherein the heat treatment is performed for a period of 1 to 4 minutes.

8. A bellows as set forth in claim 1, wherein said heat treatment is performed within a thermostatic bath.

9. A bellows as set forth in claim 1, wherein said heat treatment is performed by blowing a hot air.

10. A bellows as set forth in claim 1, which covers overall periphery of a shielding object.

11. A bellows as set forth in claim 1, which covers a part of the periphery of a shielding object.

12. A process for producing a bellows comprising the steps of:
providing a material sheet containing a elastic component;
alternately folding said material sheet in a fan folding fashion with a plurality of alternately folded folding;
compressing said folded material at a maximum compression ratio for attaining a minimum axial length of said bellows; and
effecting heat treatment with maintaining said compressed material at the compressed state at said maximum compression ratio for providing permanent deformation at each folding to have a folding angle in a range of less than or equal to 10° at no load condition.

13. A process as set forth in claim 12, wherein said folding angle at each of said folding is in a range of 0° to substantially 0°.

14. A process as set forth in claim 12, wherein said sheet is made from a primary material of a fabric coated with a neoprene rubber.

15. A process as set forth in claim 12, wherein said sheet is made from a primary material of a nylon core coated with a rubber.

16. A process as set forth in claim 12, wherein said heat treatment is performed by dipping in a hot water the bellows at the compressed condition at the maximum compression ratio.

17. A bellow as set forth in claim 16, wherein said heat treatment is performed in the hot water in a temperature range of 80 to 100 °C.

18. A process as set forth in claim 16, wherein said heat treatment is performed for a period of 1 to 4 minutes.

19. A process as set forth in claim 12, wherein said heat treatment is performed within a thermostatic bath.

20. A process as set forth in claim 12, wherein said heat treatment is performed by blowing a hot air.
